# EUROPEAN PATENT SPECIFICATION

(11) **EP 3 111 811 B1**
(45) Date of publication and mention of the grant of the patent: **05.12.2018**
(21) Application number: 14883729.7
(22) Date of filing: 04.09.2014
(51) Int. Cl.: A47J 31/40

(54) **CAPSULE DELIVERY AND REJECTION MECHANISM IN A BEVERAGE EXTRACTING DEVICE**
KAPSELZUFÜHRUNGS- UND FREIGABEMECHANISMUS IN EINER GETRÄNKEEXTRAKTIONSVORRICHTUNG
MÉCANISME D'ALIMENTATION ET DE LIBÉRATION DE CAPSULES DANS UN DISPOSITIF D'EXTRACTION DE BOISSON

(30) Priority: 26.02.2014 CN 201410066391
(43) Date of publication of application: 04.01.2017
(73) Proprietor: Ningbo Quanjing Electric Technology Co. Ltd., Zhejiang 315324 (CN)
(72) Inventor: JING, Yudong, Cixi Zhejiang 315324 (CN); FENG, Shuzhou, Cixi Zhejiang 315324 (CN)
(74) Representative: Orr, Robert
(86) International application number: PCT/CN2014/000826
(87) International publication number: WO 2015/127578

(56) References cited:
- EP-A1- 1 721 553
- EP-A1- 1 859 712
- WO-A1-2008/014830
- WO-A1-2010/032271
- CN-A- 102 068 204
- CN-A- 102 670 076
- CN-A- 103 876 633
- CN-U- 203 802 283
- CN-Y- 201 044 719

## Description

### Field of the Invention

The present invention relates to a capsules delivery and rejection mechanism in a beverage extraction device, where the beverage extraction device mainly refers to a coffeemaker.

### Description of the Prior Art

As one kind of beverage extraction devices, the existing coffeemaker generally has a function of automatic capsule rejection for ease of operation. For example, a Chinese Invention Patent CN1130345Y (Patent No.: 94193279.6), titled "Package of Ground Coffee of the Prefilled Tablet Type and Espresso Coffee Machine Using Such a Package", disclosed a coffeemaker structure allowing for automatic capsule rejection. Although this coffeemaker can allow for capsule rejection, a structure for driving the limiting blocks to rotate is to be specially designed. As a result, the structure becomes complicated. In addition, no mechanical structure for driving the limiting blocks to rotate is given in the description.

Therefore, a coffeemaker which has a simple and rational structure, is stable and convenient in operation and feels good in touching is invented. A Chinese Utility Model Patent CN201044719Y (Patent No.: 200720110811.2), titled "Capsule Automatically Rejecting Mechanism of Coffeemaker", disclosed such a coffeemaker. By jaws located on two sides of the second frame and a shaft-groove guiding structure in fit with the jaws, at least the front portions of the jaws are driven to complete one opening and closing relatively to the second frame when the second frame moves backward. For ease of capsule rejection, a spring is provided inside the chamber of the first frame. The forgoing coffeemaker structure is somewhat improved. However, it has the disadvantage of unreliable capsule rejection and dropping. If no spring is provided inside the chamber of the first frame, it is required to pull the capsule from the container relying on the adhesion between the capsule and the front end face of the second frame during the capsule rejection. If the adhesion is low, the capsule may be left in the concave chamber and thus the capsule dropping fails. If a spring is provided inside the concave chamber, after the first frame and the second frame are closed, the spring exerts a large force onto the capsule and thus the adhesion between the capsule and the front end face of the second frame becomes too high, so that the capsule may be sucked on the front end face of the second frame during the capsule rejection. As a result, even if the jaws open, it is difficult for the capsule to fall off. In addition, due to the arrangement of a spring, after extraction, the spring will be soaked in the coffee, and consequently, the coffee is contaminated and the taste is affected.

A Chinese Utility Model Patent CN202619402U (Patent No.: ZL201220211428.7), titled "Capsule Automatically Dropping Mechanism of Beverage Preparation Device", disclosed a capsule dropping mechanism comprising: a housing; a first frame having a chamber for holding a capsule with a circular edge; a second frame; two jaws, characterized in that notches for receiving clamp portions are formed on left and right sides of a rear end face of the first frame; two groups of guiding grooves for guiding a front shaft and a rear shaft of the jaws are provided on the housing; in a state in which the first frame and the second frame are totally closed, the clamp portions on the two jaws are located within the notch of the first frame; and in a state in which the second frame moves backward, the limiting portions on the two jaws move backward along with the second frame and come into contact with the circular edge of the capsule to drive the capsule to move backward and out of the chamber. The driving of the clamp portions can push the capsule from the chamber of the first frame stably, ensuring the reliability of capsule dropping. The whole capsule dropping process is simple and it is unnecessary to provide a spring inside the chamber.

In the foregoing two improved patents, two groups guiding grooves for guiding the front shaft and the rear shaft of the jaws are provided on the housing, the jaws move forward along with the second frame during the whole capsule delivery process, and there is no idle stroke between the jaws and the second frame. Therefore, in order to completely deliver a capsule into the chamber and the guiding grooves can guide the jaws to open and close according to the requirement of capsule dropping, it is necessary to provide a large overall length for the guiding grooves. The guiding grooves include a straight rear groove, a straight front groove, a curved middle groove and a curved front groove, the straight front groove is in front of the straight rear groove and inclined outward, the curved middle groove is on the outer side of the straight rear groove, and the curved front groove and the straight front groove are separated by a second barrier. Accordingly, in the foregoing two patents, the overall length of the guiding grooves is large, and the working process of the coffeemaker is completed. Consequently, the length of the whole housing cannot be made small and the coffeemaker cannot be miniaturized.

When water is boiled to clean the coffeemaker without any capsule therein, there is a gap between the two frames since the circular edge of the capsule does not exist between the two frames, and thus air-tightness cannot be formed. In order to ensure that the two frames form excellent air-tightness during the extraction, in the foregoing two improved patents, a hydraulic piston is provided inside the second frame to fill this spacing. That is, the second frame consists of a shell and a piston body inside the shell. During the extraction, the piston body can be driven by hydraulic pressure to move forward to fill this gap. However, this approach makes the structure of the second frame more complicated and also increases the cost.

WO-A-2008014830 describes a device which comprises a first portion of an infusion chamber and a second portion of an infusion chamber, movable with respect to each other according to an opening and closing direction; a first duct to feed an infusion fluid into said infusion chamber; a second duct for delivery of a food product from the infusion chamber; and a pair of guide channels to insert a capsule into a space between the first portion of the infusion chamber and the second portion of the infusion chamber. The guide channels are each produced on a respective movable element, and the movable elements are positioned substantially opposite each other and can be opened to release the capsule into the infusion chamber.

EP-A-1721553 describes an infusion assembly for a machine for preparing beverages comprising a first shoulder and a second shoulder, which face each other and are suitable to contain a cylinder for supporting a capsule; a piston for closing the capsule, which is suitable to move into a position in which the capsule is inserted in a receptacle formed within the piston; movement means suitable to move the piston; and locking means provided to allow the insertion of the capsule and its locking, the locking means movable from a position for locking the capsule to a position, as a consequence of a translational motion of the piston, that is suitable to allow the insertion of the capsule in the piston, the locking means being suitable to prevent a backward movement of the capsule when the piston returns to the inactive condition, thus allowing the capsule to fall for its disposal.

EP-A-1859712 describes a capsule-based beverage production machine comprising a module designed for producing a beverage on the basis of ingredients which are contained in a capsule. The module comprises means for retaining the capsule in a fixed position, and means for perforating the capsule, wherein the perforation means are controlled to perforate the capsule after the capsule is retained in the fixed position by the retaining means.

### Summary of the Invention

The technical problem to be solved by the present invention is to, in view of the prior art, provide a capsule delivery and rejection mechanism in a beverage extraction device, which has a simpler and more rational structure and allows for reliable capsule delivery and rejection. This mechanism has smaller overall size and low cost and can be assembled conveniently.

To solve the technical problem mentioned above, the capsule delivery and rejection mechanism in a beverage extraction device, comprises: a housing having a front portion, a back portion, a loading port, and a dropping port; a first frame positioned inside the front portion of the housing, the first frame having a left side, a right side, a chamber for holding a capsule with a circular edge; a second frame having a left side and a right side, disposed inside the back portion of the housing and being movable forward and backward relative to the first frame under the driving of a driving mechanism; two jaws, each disposed at one of left and right sides of the second frame, and the two jaws being capable of opening or closing relative to the second frame, each jaw having a front portion and a back portion, the front portion of each jaw extending to the front of the second frame to together form a clamp portion for holding the capsule;

characterized in that, each clamp portion has a first hook with a front outer surface which extends inward to hook the circular edge of the capsule and pull the capsule out, each of the left and right sides of the first frame has a guiding face for receiving the front outer surface of each first hook and guiding each first hook to move outward; each guiding face has a first guiding surface and a second guiding surface which is located on the outer side of the first guiding surface and is concaved forward, and the first guiding surface and the second guiding surface are in smooth transition;

when each jaw continues to move forward after each jaw moving to the each guiding face together with the second frame and the front outer surface of each first hook touching the corresponding guiding face, each guiding face will force the front outer surface of each first hook to move outward along the guiding face, until the front outer surface of each first hook arrives the second guiding surface of each guiding face making the two jaws to be opened;

each jaw has a guiding hole with a front end inner surface and rear end inner surface arranged in the front-back direction; each of the left and right sides of the second frame has a second hook with a front side surface and a rear side surface which is located inside the guiding hole and movable forward and backward relative to the jaws; the front side surface of the second hook touching the front end inner surface of the guiding hole defines a first contact; when each jaw continues to move forward together with the second frame, the first contact forces the jaws to move inward, that is, making the clamp portion of the jaws move from the second guiding surface to the first guiding surface along the guiding face to be closed, and ensuring that the circular edge of the capsule is located inside the first hook after the two jaws are totally closed; and the rear side surface of the second hook touching the rear end inner surface of the guiding hole defines a second contact, and the second contact forces the jaws to move backward, to make the jaws be driven to move backward together with the second frame, and meanwhile, the first hook which hooks the circular edge of the capsule pulls the capsule to leave the chamber. The capsule may be a coffee capsule.

Preferably, each of the left and right sides of the first frame has a recess opening backward, and a bottom surface of the recess forms the guiding face. The recess restricts the opening of the first hook of the jaws, in order to ensure that the jaws are opened or closed in a rational range. The front outer surface of the first hook is a curved surface. In this way, when the front outer surface of the first hook comes into contact with the guiding face, the contact surface between the front outer surface of the first hook and the guiding face is curved, so that it is easier for the jaws to deflect.

Preferably, the contact surface of the first contact is inclined. The inclined contact can enable the second hook to more stably push the front end of the jaws to deflect toward the closing direction.

Preferably, the contact surface of the second contact is inclined, and under the second contact, the second hook enables the jaws to maintain a closing tendency. In this way, when the second frame moves backward, the jaws are caused to always maintain a tendency of holding the circular edge of the capsule. This can better ensure that the first hook can hook the capsule out smoothly, so that the capsule rejection is performed smoothly.

Preferably, the housing and the first frame are integrally injection-molded forming an integrally injection-molded part having an axial passage, and the second frame is located at the rear of the passage; the second frame has two limiting strips protruding outward respectively disposed at each of the left and right sides of the second frame, correspondingly, the housing has two guiding grooves respectively disposed at each of the left and right sides of the rear of the passage for receiving and guiding the limiting strip. The housing is integrally molded, so that the assembly process is simplified, the mass production is facilitated, and the cost is reduced. By the fitting of the guiding grooves and the limiting strip, the second frame is more stably restricted in the rear portion of the housing, and the second frame is also guided.

Preferably, each jaw is restricted between the limiting strip and the bottom of the guiding grooves, each guiding groove has a front portion and a rear portion, the bottom surface of the rear portion of the guiding groove is plane, and the bottom surface of the front portion of the guiding groove is a slope which is inclined outward from the back portion to the front portion of the housing; while, each limiting strip has a front portion and a rear portion, the outer surface of the front portion of each limiting strip is plane, and the outer surface of the rear portion of each limiting strip is inclined inward from the front portion to the back portion of the housing. During the first half of forward movement of the second frame, under the holding of the flat face of the front portion of the limiting strip and the flat surface of the rear portion of the guiding groove, the jaws are ensured not to deflect during the first half of forward movement of the second frame, and when the jaws move forward to a position where the jaws need to deflect, the slope of the front portion of the guiding groove and the slope of the rear portion of the limiting strip provide a space for deflection of the jaws, and also provide some restraints to the deflection angle of the jaws.

Preferably, the lower portion of the inner surface of the clamp portion is in curve which is bent inward. In this way, it can be ensured that, when the jaws are closed, the lower portion of the inner end face of the clamp portion supports the lower portion of the peripheral surface of the capsule to some extent, so that the capsule can be more stably placed inside a clamp formed between the two clamp portions. This is applicable to hard capsules.

Preferably, each jaw has an extension wall disposed at the position of the clamp portion, which extends backward, and the inner surface of each extension wall is a curved surface which is bent inward. Such jaw is suitable to hold a capsule of the type to be pierced for extraction. The whole shape of such a capsule looks like a truncated cone; the main body of the capsule is a thin-wall casing made of plastic material; and the capsule has a truncated cross-section, and the surrounding wall and the top and the bottom surfaces of the capsule are all enclosed. After loaded, the circular edge of the capsule is between the two extension walls.

There are mainly two types of capsules. One is a type not to be pierced for extraction, for example, a capsule having a conical cross-section casing with a rigid surrounding wall and a lot of tiny holes distributed on the upper and lower end surfaces thereof. The other is a type to be pierced for extraction: the whole shape of such a capsule looks like a truncated cone; the main body of the capsule is a thin-wall casing made of plastic material; and the capsule has a conical cross-section, and the surrounding wall and upper and lower end surfaces of the capsule are all enclosed. When the capsule delivery and rejection mechanism is applied to such a capsule to be pierced for extraction, it is required that, a front piercer disk is disposed inside the chamber of the first frame, and a rear piercer disk is disposed on the front end surface of the second frame, a sealing ring is disposed on the front end surface of the second frame.

The driving mechanism comprises a connecting rod, a rotating shaft disposed at the back portion of the housing, a handle, a connecting shaft disposed on the connecting rod, and two transmission bars; the lower portion of the connecting rod is movable connected with the rotating shaft; the connecting rod is driven by the handle to rotate, the top of each transmission bar s respectively rotatably connected with one of the left and right ends of connecting rod shaft being engaged with the upper portion of the connecting rod, and the bottom of each transmission bar is respectively rotatably engaged with the second frame through a pin shaft; the connecting rod has an opening and two strip holes formed on the left and right sides of the opening for respectively receiving each end of the connecting rod shaft; a spring, disposed inside the opening and below the connecting rod shaft, resists against the connecting rod shaft enabling the connecting rod shaft to maintain a tendency of moving upward. The gap formed between the two frames due to the lack of a capsule is eliminated by pushing the connecting rod shaft by the spring to move forward and backward inside the strip hole. This structure omits the piston required to fill the gap, so that a simplest plate-type structure can be employed as the structure of the second frame, and thus the cost is reduced. Meanwhile, this spring can also improve the touch feeling when pushing the handle. Of course, as the driving mechanism, the existing other driving mechanisms can be possible.

The rotating shaft is connected with a bolt by threads. The stem portion of the bolt is inserted into the opening. A spring seat is fixed on the stem portion of the bolt. The lower end of the spring is sleeved on the spring seat, and the upper end of the spring comes into contact with the connecting rod shaft. This is a specific implementation of restricting the spring inside the opening.

Compared with the prior art, the present invention has the following advantages: in a state in which the first frame and the second frame are totally opened, the two jaws can hold a capsule when they are closed; in a state in which the second frame moves forward so that the capsule is partially located inside the chamber, the front outer surface of the first hook comes into contact with the guiding face; the second frame continues to move forward, the front outer surface of the first hook moves outward along the guiding face to force the front ends of the two jaws to open, in order to ensure that the capsule is further pushed into the chamber; the second frame further moves forward, the second hook moves forward relative to the guiding hole, and meanwhile, under the first contact of the front side surface of the second hook and the front end inner surface of the guiding hole, the two jaws are forced to close and the circular edge of the capsule is located inside the first hook, and now the first frame and the second frame are totally closed to form an extraction chamber to complete the capsule loading; and the second frame moves backward, the second hook moves backward relative to the guiding hole and carries the capsule out, and after the second hook comes into the inner rear end surface of the guiding hole, the further backward movement of the second frame drives the first hook on the two jaws to move backward to carry the capsule out of the chamber to complete the capsule rejection. Therefore, the capsule delivery and rejection mechanism realizes the capsule delivery and rejection mainly by various interlocked fitting relations between the first hook, the guiding holes on the jaws, the guiding face and the second hook, and the slope fitting structure between the guiding holes. The capsule delivery and rejection design is very skillful, and the opening of the jaws begins when the capsule substantially enters the chamber. During this process, the second hook has an idle stroke inside the guiding hole, so that the whole stroke is short. Thus, the overall size of the capsule delivery and rejection mechanism becomes smaller, and the miniaturization of coffeemakers is facilitated. Furthermore, the original complicated shaft-groove fitting structure is omitted, leading to simpler overall structure and manufacture process and low cost.

### Brief Description of the Drawings

Fig. 1 is a perspective view of a capsule delivery and rejection mechanism in a beverage extraction device according to a first embodiment of the present invention;
Fig. 2 is a sectional view of the mechanism according to the first embodiment of the present invention (when the beverage extraction device is opened and the capsule is loaded);
Fig. 3 is a longitudinal sectional view of the mechanism according to the first embodiment of the present invention (when the beverage extraction device is opened and the capsule is loaded);
Fig. 4 is a sectional view of the mechanism according to the first embodiment of the present invention (when the second frame moves forward to the front outer surface of the first hook to exactly come into contact with the guiding face);
Fig. 5 is a sectional view of the mechanism according to the first embodiment of the present invention (when the second frame moves forward to the front outer surface of the first hook to move along the guiding face, and the jaws are opened);
Fig. 6 is a sectional view of the mechanism according to the first embodiment of the present invention (when the second frame moves forward to the front outer surface of the first hook to come into contact with the front inner end surface of the guiding hole);
Fig. 7 is a sectional view of the mechanism according to the first embodiment of the present invention (when the jaws are closed under the first contact, and the circular edge of the capsule is located inside the first hook);
Fig. 8 is a sectional view of the mechanism according to the first embodiment of the present invention (when the second frame moves backward to the second hook to come into contact with the inner rear end surface of the guiding hole);
Fig. 9 is a sectional view of the mechanism according to the first embodiment of the present invention (when the second frame moves backward to the first hook to carry the capsule out of the chamber);
Fig. 10 is a sectional view of the mechanism according to the first embodiment of the present invention (when the second frame is totally opened for capsule dropping);
Fig. 11 is a perspective view of the second frame driving mechanism according to the first embodiment of the present invention;
Fig. 12 is a perspective view of the housing according to the first embodiment of the present invention;
Fig. 13 is a perspective view of the second frame according to the first embodiment of the present invention;
Fig. 14 is a first perspective view of jaws according to the first embodiment of the present invention;
Fig. 15 is a second perspective view of each jaw according to the first embodiment of the present invention;
Fig. 16 is a perspective view of the connecting rod according to the first embodiment of the present invention;
Fig. 17 is a longitudinal sectional view of the piercer disk according to the first embodiment of the present invention;
Fig. 18 is a perspective view of the jaws and the capsule in a capsule delivery and rejection mechanism in a beverage extraction device according to a second embodiment of the present invention, in a state that the capsule is loaded, for example, a capsule needed to be pierced;
Fig. 19 is a first perspective view of a jaw in a capsule delivery and rejection mechanism in a beverage extraction device according to the second embodiment of the present invention (suitable for holding a capsule needed to be pierced); and
Fig. 20 is a second perspective view of the jaw in the mechanism according to the second embodiment of the present invention (suitable for holding a capsule needed to be pierced).

### Detailed Description of the Preferred Embodiment

To enable a further understanding of the present invention content of the invention herein, refer to the detailed description of the invention and the accompanying drawings below:

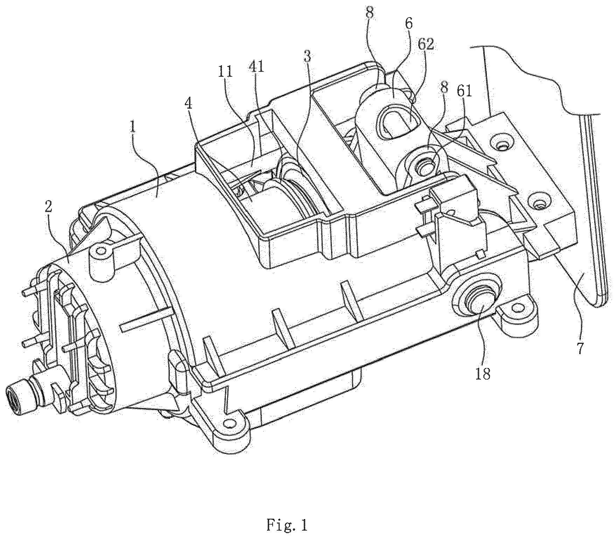

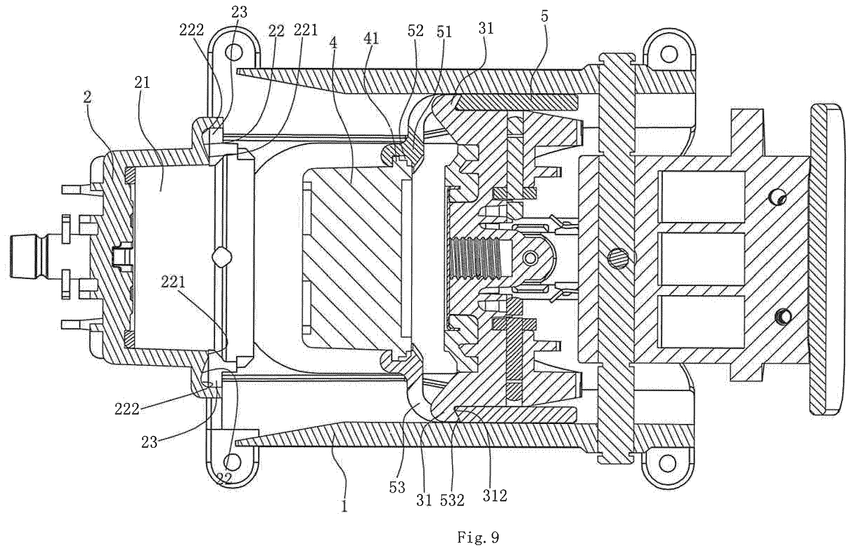

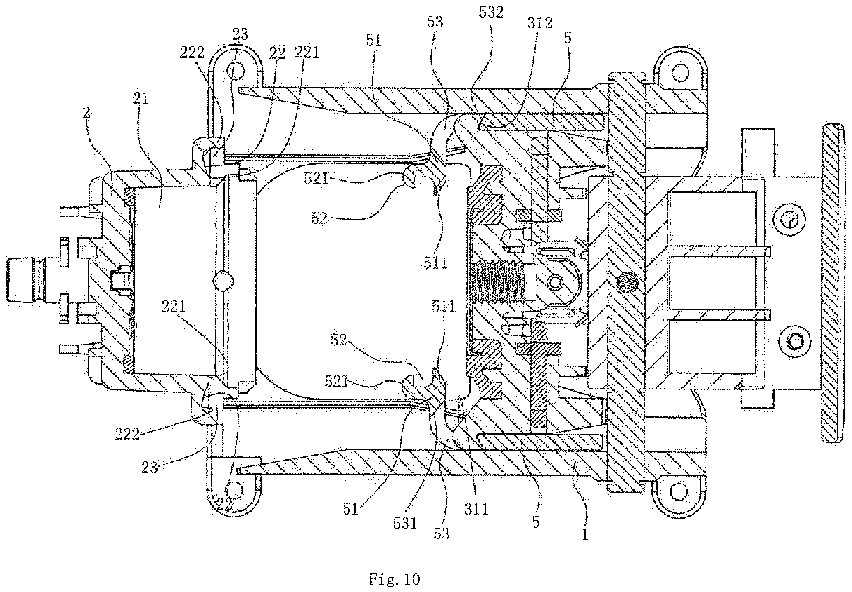

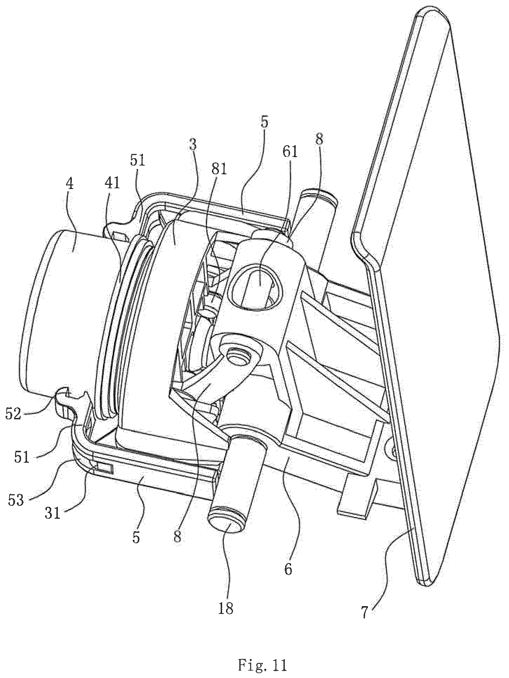

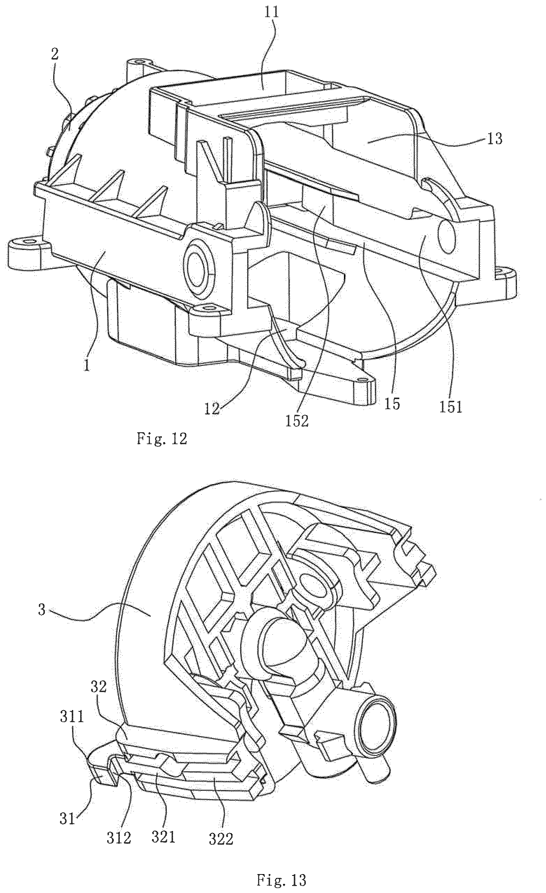

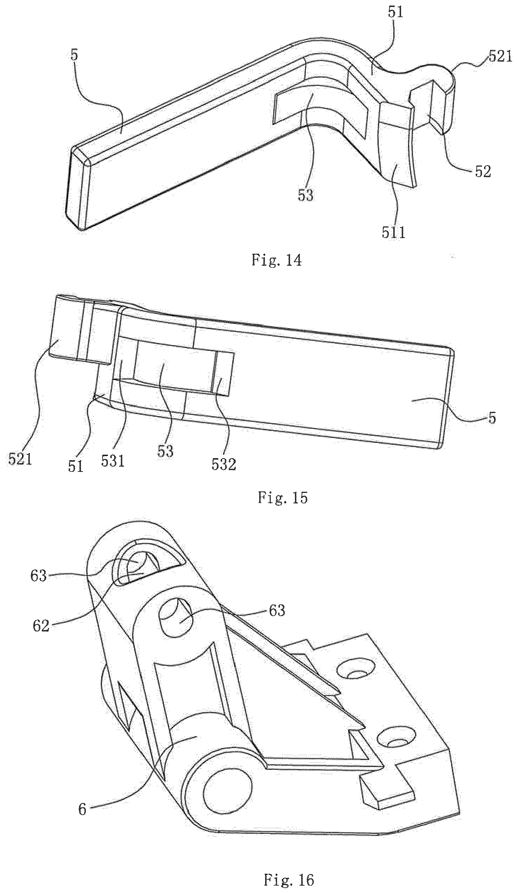

Fig. 1 - Fig. 17 show a preferred first embodiment of a capsule delivery and rejection mechanism in a beverage extraction device of the present invention.

The capsule delivery and rejection mechanism comprises a housing 1 having a front portion, a back portion, a loading port 11, and a dropping port 12;
a first frame 2 positioned inside the front portion of the housing 1, the first frame 2 having a left side, a right side, a chamber 21 for holding a capsule 4 with a circular edge 41, the first frame 2 having a liquid outlet passage;
a second frame 3 having a left side and a right side, disposed inside the back portion of the housing 1 and being movable forward and backward relative to the first frame 2 under the driving of a driving mechanism, the second frame 3 having a liquid inlet passage; and
two jaws 5, substantially L-shaped, each located at one of left and right sides of the second frame 3 and the two jaws 5 being capable of opening or closing relative to the second frame 3.

The housing 1 and the first frame 2 are integrally injection-molded forming an integrally injection-molded part having an axial passage 13, and the second frame 2 is located at the rear of the passage 13; the second frame 3 has two limiting strips 32 protruding outward respectively disposed at each of the left and right sides of the second frame 3, correspondingly, the housing 1 has two guiding grooves 15 respectively disposed at each of the left and right sides of the rear of the passage 13 for receiving and guiding the limiting strip 32.

The driving mechanism comprises an L-shaped connecting rod 6, a rotating shaft 18 disposed at the back portion of the housing 1, a handle 7, a connecting shaft 61 disposed on the connecting rod 6, and two transmission bars 8; the lower portion of the connecting rod 6 is movable connected with the rotating shaft 18; the connecting rod 6 is driven by the handle 7 to rotate, the top of each transmission bar 8 is respectively rotatably connected with one of the left and right ends of connecting rod shaft 61 being engaged with the upper portion of the connecting rod 6, and the bottom of each transmission bar 8 is respectively rotatably engaged with the second frame 3 through a pin shaft 81; the connecting rod 6 has an opening 62 and two strip holes 63 formed on the left and right sides of the opening 62 for respectively receiving each end of the connecting rod shaft 61; a spring 9, disposed inside the opening 62 and below the connecting rod shaft 61, resists against the connecting rod shaft 61 enabling the connecting rod shaft 61 to maintain a tendency of moving upward. The rotating shaft 18 is connected with a bolt 10 by threads. The stem portion of the bolt 10 is inserted into the opening 62. A spring seat 91 is fixed on the stem portion of the bolt 10. The lower end of the spring 9 is sleeved on the spring seat 91, and the upper end of the spring 9 comes into contact with the connecting rod shaft 61.

Each jaw 5 has a front portion and a back portion, the front portion of each jaw 5 extending to the front of the second frame 3 to together form a clamp portion 51 for holding the capsule 4, the two clamp portions 51 are spaced apart from each other to form a clamp for holding a capsule 4, and the lower portion of the inner end surface of the clamp portion 51 is a curved surface 511 which is bent inward. Each clamp portion 51 has a first hook 52 with a front outer surface 521 which extends inward to hook the circular edge 41 of the capsule 4 and pull the capsule 4 out, the first hook 52 actually is a U-shaped groove which is running through vertically, and the front outer surface of the first hook 52 is a curved surface.

Each of the left and right sides of the first frame 2 has a guiding face 22 for receiving the front outer surface 521 of each first hook 52 and guiding each first hook 52 to move outward; each guiding face 22 has a first guiding surface 221 and a second guiding surface 222 which is located on the outer side of the first guiding surface 221 and is concaved forward, and the first guiding surface 221 and the second guiding surface 222 are in smooth transition. Each of the left and right sides of the first frame 2 has a recess 23 opening backward, and a bottom surface of the recess 23 forms the guiding face 22.

When each jaw 5 continues to move forward after each jaw 5 moving to the each guiding face together with the second frame 3 and the front outer surface 521 of each first hook 52 touching the corresponding guiding face 22, each guiding face 22 will force the front outer surface 521 of each first hook 52 to move outward along the guiding face 22, until the front outer surface 521 of each first hook 52 arrives the second guiding surface 222 of each guiding face 22 making the two jaws 5 to be opened; each jaw 5 has a guiding hole 53 with a front end inner surface 531 and rear end inner surface 532 arranged in the front-back direction; each of the left and right sides of the second frame 3 has a second hook 31 with a front side surface 311 and a rear side surface 312 which is located inside the guiding hole 53 and movable forward and backward relative to the jaws 5; the front side surface 311 of the second hook 31 touching the front end inner surface 531 of the guiding hole 53 defines a first contact, the contact surface of the first contact is inclined; when each jaw 5 continues to move forward together with the second frame 3, the first contact forces the jaws 5 to move inward, that is, making the clamp portion 51 of the jaws 5 move from the second guiding surface 222 to the first guiding surface 221 along the guiding face 22 to be closed, and ensuring that the circular edge 41 of the capsule 4 is located inside the first hook 52 after the two jaws 5 are totally closed; and the rear side surface 312 of the second hook 31 touching the rear end inner surface 532 of the guiding hole 53 defines a second contact, the contact surface of the second contact is inclined, and the second contact forces the jaws 5 to move backward, to make the jaws 5 be driven to move backward together with the second frame 3, and meanwhile, the first hook 52 which hooks the circular edge 41 of the capsule 4 pulls the capsule 4 to leave the chamber 21.

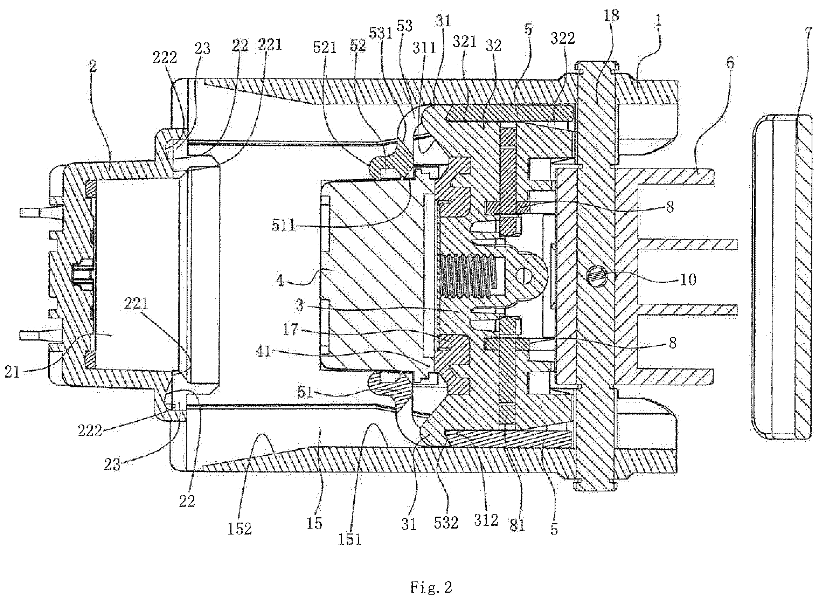

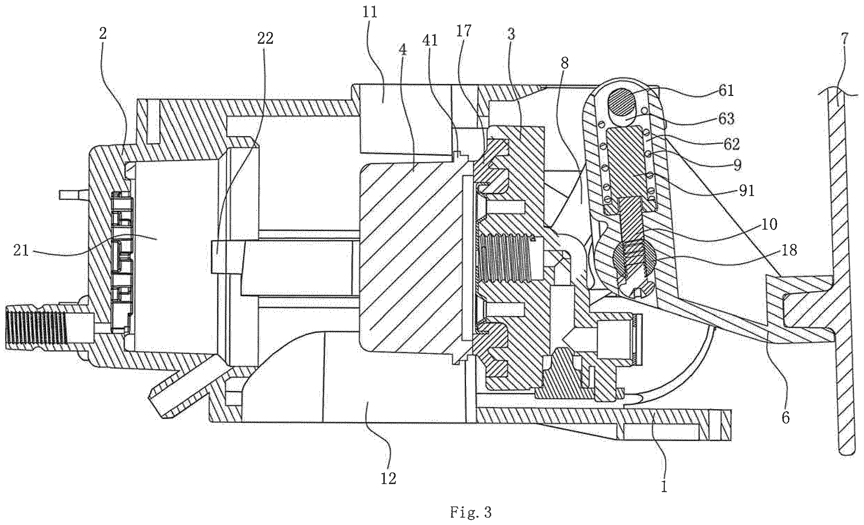

That is, as shown in Fig. 2 and Fig. 3, in a state in which the first frame 2 and the second frame 3 are totally opened, the two jaws 5 are closed and thus can hold the capsule 4. The capsule 4 is placed between the two clamp portions, with the lower portion of the body of the capsule 4 being rested on the curved surface 511 of the clamp portion 51, and the circular edge 41 of the capsule 4 being located between the front end surface of the second frame 3 and the rear end surface of the clamp portion 51.

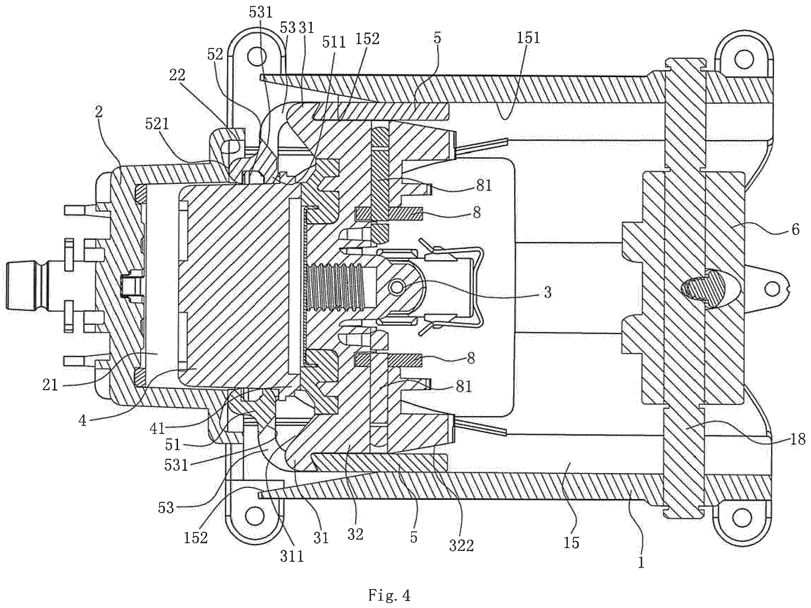

As shown in Fig. 4, in a state in which a portion of the second frame 3 moving forward to the capsule 4 is located inside the chamber 21, the front outer surface 521 of the first hook 52 exactly comes into contact with the guiding face 22.

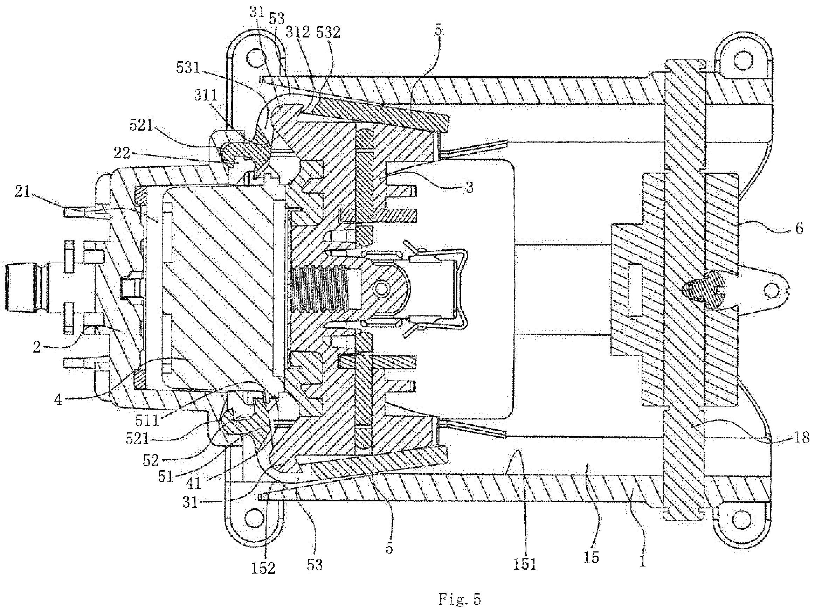

As shown in Fig. 5, the second frame 3 continues to move forward, the guiding face 22 exerts an outward thrust onto the front end of the jaws 5, and the front outer surface 521 of each first hook 52 moves outward along the guiding face 22 to force the front ends of the two jaws 5 to open, in order to ensure that the capsule 4 is further pushed into the chamber 21.

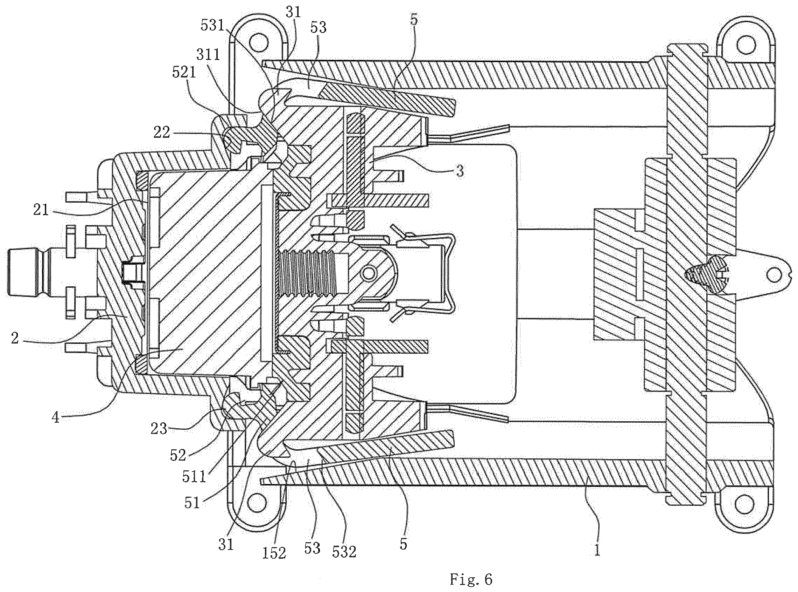

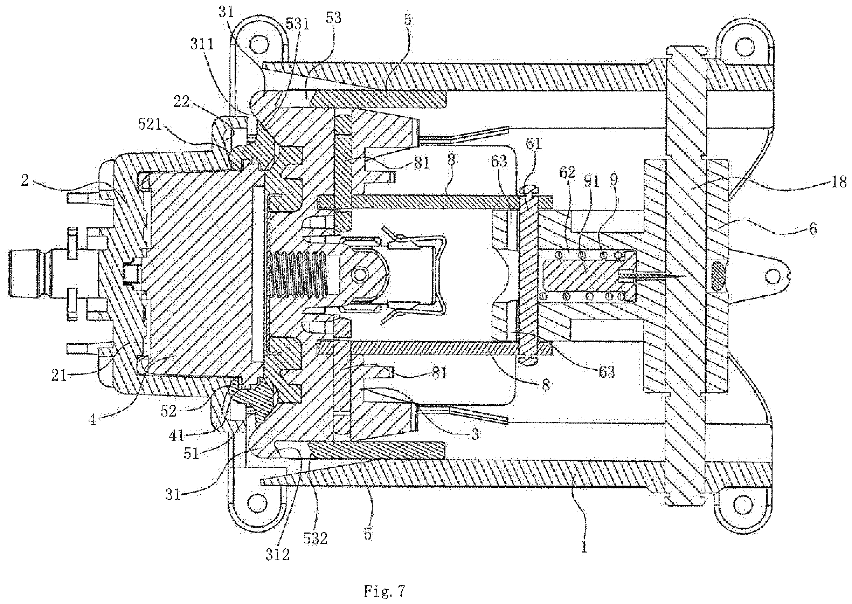

As shown in Fig. 6 and Fig. 7, the second frame 3 further moves forward, and the second hook 31 moves forward relative to the guiding hole 53. Meanwhile, under the slope fitting between the front side surface 311 of the second hook 31 and the front end inner surface 531 of the guiding hole 53, the jaws 5 are forced to move inward, that is, making the clamp portion 51 of the jaws 5 move from the second guiding surface 222 to the first guiding surface 221 along the guiding face to be closed, and ensuring that the circular edge 41 of the capsule 4 is located inside the first hook 52 after the two jaws 5 are totally closed, and now the first frame 2 and the second frame 3 are totally closed to form an extraction chamber to complete the capsule loading.

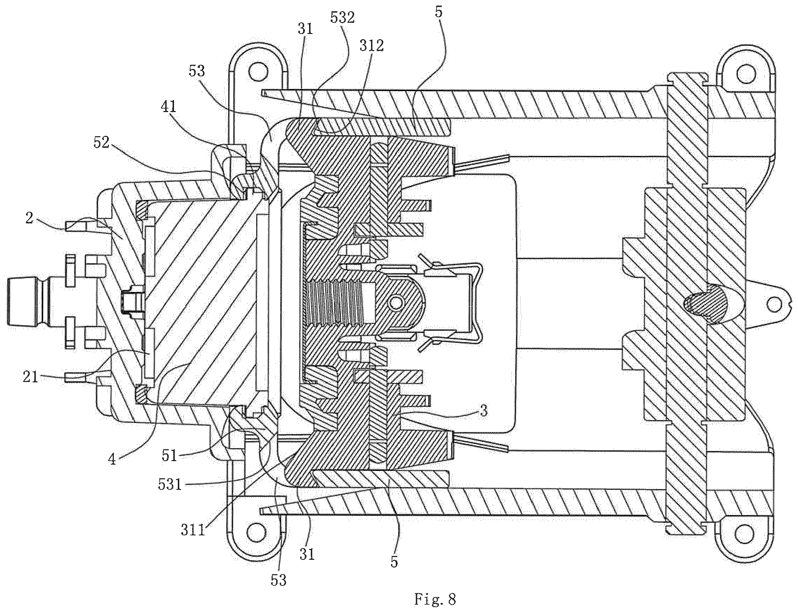

As shown in Fig. 8, Fig. 9 and Fig. 10, after extraction, the second frame 3 moves backward, the second hook 31 moves backward relative to the guiding hole 53, and after the second hook 31 comes into the rear end inner surface 532 of the guiding hole 53, the further backward movement of the second frame 3 drives the first hook 52 on the two jaws 5 to move backward to carry the capsules out of the chamber 21 to complete the rejection.

Each jaw 5 is restricted between the limiting strip 32 and the bottom of the guiding grooves 15, each guiding groove 15 has a front portion and a rear portion, the bottom surface of the rear portion 151 of the guiding groove 15 is plane, and the bottom surface of the front portion 152 of the guiding groove 15 is a slope which is inclined outward from the back portion to the front portion of the housing 1; while, each limiting strip 32 has a front portion and a rear portion, the outer surface of the front portion 321 of each limiting strip 32 is plane, and the outer surface of the rear portion 32 of each limiting strip 32 is inclined inward from the front portion to the back portion of the housing 1.

The capsule in the foregoing embodiment is a hard coffee capsule as an example. The shell of the hard capsule has a truncated cross-section, and a rigid surrounding wall. Furthermore, the shell has a certain thickness and a lot of tiny holes distributed on the upper and lower end faces thereof. Such a capsule is not to be pierced.

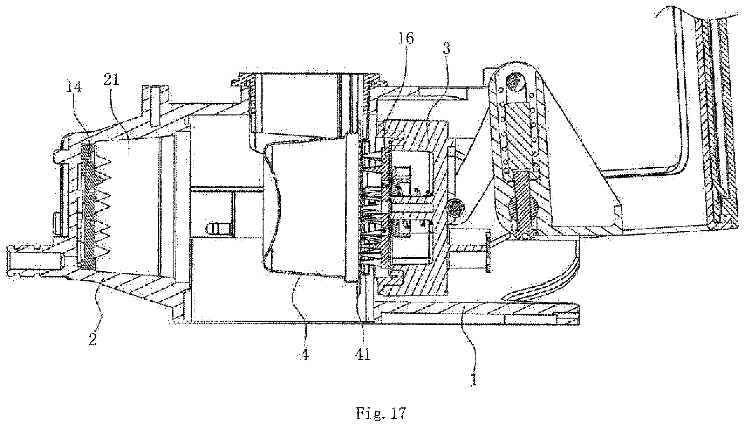

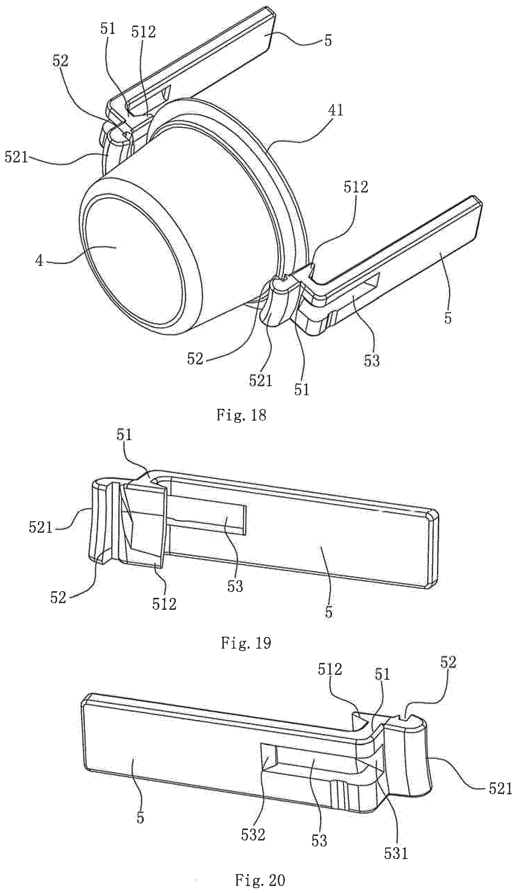

As shown in Fig. 17 to Fig. 20, a capsule to be pierced for extraction is used. The whole shape of such a capsule looks like a truncated cone; the main body of the capsule is a thin-wall casing made of plastic material; and the capsule has a conical cross-section, and the surrounding wall and upper and lower end surfaces of the capsule are all enclosed. A front piercer disk 14 is disposed inside the chamber 21 of the first frame 2, and a rear piercer disk 16 is disposed on the front end surface of the second frame 3, a sealing ring 17 is disposed on the front end surface of the second frame 3. For such a capsule, the structure of the jaws 5 is adaptively improved. That is, each jaw 5 has an extension wall 512 disposed at the position of the clamp portion 51, which extends backward, and the inner surface of each extension wall 512 is a curved surface which is bent inward. After loaded, the circular edge 41 of the capsule is between the two extension walls 512.

The operating process of the capsule delivery and rejection mechanism is as follows.

Capsule loading: The driving mechanism drives the second frame 3 to move backward to open, the two jaws 5 are closed and thus can hold the capsule 4, the capsule 4 is loaded from the loading port 11 and placed between the two clamp portions, with the lower portion of the body of the capsule 4 being rested on the curved surface 511 of the clamp portion 51, and the circular edge 41 of the capsule 4 being located between the front end surface of the second frame 3 and the rear end surface of the clamp portion 51.

Capsule delivery: The second frame 3 moves forward, and since the circular edge 41 of the capsule 4 is between the front end surface of the second frame 3 and the rear end surface of the clamp portion 51, the forward movement of the second frame 3 can drive the capsule and the jaws to move forward together; and in a state in which the capsule 4 is partially located inside the chamber 21, the front outer surface 521 of the first hook 52 comes into contact with the first guiding surface 221 of the guiding face 22. The second frame 3 continues to move forward, the guiding face 22 exerts an outward thrust onto the front end of the jaws 5, and the front outer surface 521 of the first hook 52 moves outward along the guiding face 22 to the second guiding surface 222 to force the front end of the two jaws 5 to open, in order to ensure that the capsule 4 is further pushed into the chamber 21. The second frame 3 further moves forward, the second hook 31 moves forward relative to the guiding hole 53, and meanwhile, under the first contact of the front side surface 311 of the second hook 31 and the front end inner surface of the guiding hole 53, the two jaws 5 are forced to close and the circular edge 41 of the capsule 4 is located inside the first hook 52, and now the first frame 2 and the second frame 3 are totally closed to form an extraction chamber to complete the capsule loading. Then, extraction can be started.

Capsule rejection: At the end of extraction, the second frame 3 moves backward, the second hook 31 moves backward relative to the guiding hole 53, and after the second hook 31 comes into the rear end inner surface 522 of the guiding hole 53, the further backward movement of the second frame 3 drives the first hook 52 on the two jaws 5 to move backward to carry the capsule out of the chamber 21. The capsule 4 falls from the dropping port 12. So far, the rejection of the capsule is accomplished.

## Claims

1. A capsule delivery and rejection mechanism in a beverage extraction device, comprising:
a housing (1) having a front portion, a back portion, a loading port (11), and a dropping port (12);
a first frame (2) positioned inside the front portion of the housing (1), the first frame (2) having a left side, a right side, a chamber (21) for holding a capsule (4) with a circular edge (41);
a second frame (3) having a left side and a right side, disposed inside the back portion of the housing (1) and being movable forward and backward relative to the first frame (2) under the driving of a driving mechanism;
two jaws (5), each disposed at one of left and right sides of the second frame (3), and the two jaws (5) being capable of opening or closing relative to the second frame (3), each jaw (5) having a front portion and a back portion, the front portion of each jaw (5) extending to the front of the second frame (3) to together form a clamp portion (51) for holding the capsule (4);
**characterized in that**,
each clamp portion (51) has a first hook (52) with a front outer surface (521) which extends inward to hook the circular edge (41) of the capsule (4) and pull the capsule (4) out, each of the left and right sides of the first frame (2) has a guiding face (22) for receiving the front outer surface (521) of each first hook (52) and guiding each first hook (52) to move outward;
each guiding face (22) has a first guiding surface (221) and a second guiding surface (222) which is located on the outer side of the first guiding surface (221) and is concaved forward, and the first guiding surface (221) and the second guiding surface (222) are in smooth transition;
when each jaw (5) continues to move forward after each jaw (5) moving to the each guiding face (22) together with the second frame (3) and the front outer surface (521) of each first hook (52) touching the corresponding guiding face (22), each guiding face (22) will force the front outer surface (521) of each first hook (52) to move outward along the guiding face (22), until the front outer surface (521) of each first hook (52) arrives the second guiding surface (222) of each guiding face (22) making the two jaws (5) to be opened;
each jaw (5) has a guiding hole (53) with a front end inner surface (531) and rear end inner surface (532) arranged in the front-back direction; each of the left and right sides of the second frame (3) has a second hook (31) with a front side surface (311) and a rear side surface (312) which is located inside the guiding hole (53) and movable forward and backward relative to the jaws (5); the front side surface (311) of the second hook (31) touching the front end inner surface (531) of the guiding hole (53) defines a first contact; when each jaw (5) continues to move forward together with the second frame (3), the first contact forces the jaws (5) to move inward, that is, making the clamp portion (51) of the jaws (5) move from the second guiding surface (222) to the first guiding surface (221) along the guiding face (22) to be closed, and ensuring that the circular edge (41) of the capsule (4) is located inside the first hook (52) after the two jaws (5) are totally closed;
and the rear side surface (312) of the second hook (31) touching the rear end inner surface (532) of the guiding hole (53) defines a second contact, and the second contact forces the jaws (5) to move backward, to make the jaws (5) be driven to move backward together with the second frame (3), and meanwhile, the first hook (52) which hooks the circular edge (41) of the capsule (4) pulls the capsule (4) to leave the chamber (21).

2. The capsule delivery and rejection mechanism according to claim 1, wherein each of the left and right sides of the first frame (2) has a recess (23) opening backward, and a bottom surface of the recess (23) forms the guiding face (22), the front outer surface (521) of the first hook (52) is a curved surface.

3. The capsule delivery and rejection mechanism according to claim 1, wherein the contact surface of the first contact is inclined.

4. The capsule delivery and rejection mechanism according to claim 3, wherein the contact surface of the second contact is inclined, and under the second contact, the second hook (31) enables the jaws (5) to maintain a closing tendency.

5. The capsule delivery and rejection mechanism according to claim 1, wherein the housing (1) and the first frame (2) are integrally injection-molded forming an integrally injection-molded part having an axial passage (13), and the second frame (3) is located at the rear of the passage (13); the second frame (3) has two limiting strips (32) protruding outward respectively disposed at each of the left and right sides of the second frame (3), correspondingly, the housing (1) has two guiding grooves (15) respectively disposed at each of the left and right sides of the rear of the passage (13) for receiving and guiding the limiting strip (32).

6. The capsule delivery and rejection mechanism according to claim 5, wherein each jaw (5) is restricted between the limiting strip (32) and the bottom of the guiding grooves (15), each guiding groove (15) has a front portion and a rear portion, the bottom surface of the rear portion (151) of the guiding groove (15) is plane, and the bottom surface of the front portion (152) of the guiding groove (15) is a slope which is inclined outward from the back portion to the front portion of the housing (1); while, each limiting strip (32) has a front portion and a rear portion, the outer surface of the front portion (321) of each limiting strip (32) is plane, and the outer surface of the rear portion (32) of each limiting strip (32) is inclined inward from the front portion to the back portion of the housing (1).

7. The capsule delivery and rejection mechanism according to claim 1, wherein the lower portion of the inner surface of the clamp portion (51) is in curve which is bent inward.

8. The capsule delivery and rejection mechanism according to claim 1, wherein a front piercer disk (14) is disposed inside the chamber (21) of the first frame (2), and a rear piercer disk (16) is disposed on the front end surface of the second frame (3), a sealing ring (17) is disposed on the front end surface of the second frame (3).

9. The capsule delivery and rejection mechanism according to claim 8, wherein each jaw (5) has an extension wall (512) disposed at the position of the clamp portion (51), which extends backward, and the inner surface of each extension wall (512) is a curved surface which is bent inward.

10. The capsule delivery and rejection mechanism according to anyone according to claim 1-9, wherein the driving mechanism comprises a connecting rod (6), a rotating shaft (18) disposed at the back portion of the housing (1), a handle (7), a connecting shaft (61) disposed on the connecting rod (6), and two transmission bars (8);
the lower portion of the connecting rod (6) is movable connected with the rotating shaft (18); the connecting rod (6) is driven by the handle (7) to rotate, the top of each transmission bar (8) is respectively rotatably connected with one of the left and right ends of connecting rod shaft (61) being engaged with the upper portion of the connecting rod (6), and the bottom of each transmission bar (8) is respectively rotatably engaged with the second frame (3) through a pin shaft (81); the connecting rod (6) has an opening (62) and two strip holes (63) formed on the left and right sides of the opening (62) for respectively receiving each end of the connecting rod shaft (61);
a spring (9), disposed inside the opening (62) and below the connecting rod shaft (61), resists against the connecting rod shaft (61) enabling the connecting rod shaft (61) to maintain a tendency of moving upward.

## Patentansprüche

1. Kapselzuführungs- und Freigabemechanismus in einer Getränkeextraktionsvorrichtung, umfassend
ein Gehäuse (1), das einen vorderen Bereich, einen hinteren Bereich, eine Ladeöffnung (11), und eine Abwurföffnung (12) aufweist;
einen innerhalb des vorderen Bereichs des Gehäuses (1) angeordneten ersten Rahmen (2), wobei der erste Rahmen (2) eine linke Seite, eine rechte Seite, eine Kammer (21) zum Halten einer Kapsel (4) mit einem kreisförmigen Rand (41) aufweist;
einen eine linke Seite und eine rechte Seite aufweisenden zweiten Rahmen (3), der innerhalb des hinteren Bereichs des Gehäuses (1) angeordnet und nach vorne und hinten relativ zu dem ersten Rahmen (2) unter dem Antrieb eines Antriebsmechanismus bewegbar ist;
zwei Backen (5), wobei jede an einer der linken und rechten Seiten des zweiten Rahmens (3) angeordnet ist, und wobei die zwei Backen (5) sich relativ zu dem zweiten Rahmen (3) öffnen und schließen können, wobei jede Backe (5) einen vorderen Bereich und eine hinteren Bereich aufweist, wobei der vordere Bereich jeder Backe (5) sich hin zu der Vorderseite des zweiten Rahmens (3) erstreckt, um gemeinsam einen Klemmbereich (51) zum Halten der Kapsel (4) zu bilden;
**dadurch gekennzeichnet,**
**dass** jeder Klemmbereich (51) einen ersten Haken (52) mit einer vorderen äußeren Oberfläche (521) aufweist, welche sich nach innen erstreckt, um sich an den kreisförmigen Rand (41) der Kapsel (4) zu haken und die Kapsel (4) herauszuziehen, wobei jede der linken und rechten Seiten des ersten Rahmens (2) eine Führungsseite (22) zur Aufnahme der vorderen äußeren Oberfläche (521) jedes ersten Haken (52) und zum Führen jedes ersten Hakens (52), um sich nach außen zu bewegen, aufweist;
wobei jede Führungsseite (22) eine erste Führungsfläche (221) und eine zweite Führungsfläche (222) aufweist, welche auf der Außenseite der ersten Führungsfläche (221) angeordnet ist und nach vorne gewölbt ist und wobei die erste Führungsfläche (221) und die zweite Führungsfläche (222) sich in glattem Übergang zueinander befinden;
wobei, wenn jede Backe (5) sich weiterhin nach vorne bewegt, nachdem jede sich zu jeder Führungsseite (22) zusammen mit dem zweiten Rahmen (3) und der vorderen äußeren Oberfläche (521) jedes ersten Hakens (52) bewegende Backe (5) die zugehörige Führungsseite (22) berührt, jede Führungsseite (22) die vordere äußere Oberfläche (521) jedes ersten Hakens (52) dazu bewegt, sich nach außen entlang der Führungsseite (22) zu bewegen, bis die vordere äußere Oberfläche (521) jedes ersten Hakens (52) die zweite Führungsfläche (222) jeder Führungsseite (22) erreicht und die zwei Backen (5) dazu bringt, geöffnet zu sein;
wobei jede Backe (5) ein Führungsloch (53) mit in der Vorne-Hinten-Richtung angeordneter vorderer Innenseite (531) und hinterer Innenseite (532) aufweist; wobei jede der linken und rechten Seiten des zweiten Rahmens (3) einen zweiten Haken (31) mit einer vorderen Seitenfläche (311) und einer hinteren Seitenfläche (312) aufweist, welcher innerhalb des Führungsloches (53) angeordnet ist und relativ zu den Backen (5) nach vorne und hinten bewegbar ist; wobei die vordere Seitenfläche (311) des zweiten Hakens (31), welche die vordere Innenseite (531) des Führungsloches (53) berührt, einen ersten Kontakt definiert; wobei, wenn jede Backe (5) sich weiterhin gemeinsam mit dem zweiten Rahmen (3) nach vorne bewegt, der erste Kontakt die Backen (5) zwingt, sich nach innen zu bewegen, das heißt, den Klemmbereich (51) der Backen (5) von der zweiten Führungsfläche (222) zu der ersten Führungsfläche (221) entlang der Führungsseite (22) bewegen lässt, um geschlossen zu werden und sicherzustellen, dass der kreisförmige Rand (41) der Kapsel (4) innerhalb des ersten Hakens (52) angeordnet ist, nachdem die zwei Backen (5) vollständig geschlossen sind;
und wobei die hintere Seitenfläche (312) des zweiten Hakens (31), welche die hintere Innenseite (532) des Führungsloches (53) berührt, einen zweiten Kontakt definiert und der zweite Kontakt die Backen (5) zwingt, sich nach hinten zu bewegen, um die Backen (5) dazu anzutreiben, sich gemeinsam mit dem zweiten Rahmen (3) nach hinten zu bewegen und währenddessen der erste Haken (52), welcher sich an den kreisförmigen Rand (41) der Kapsel (4) hakt, die Kapsel (4) zieht, um die Kammer (21) zu verlassen.

2. Kapselzuführungs- und Freigabemechanismus nach Anspruch 1, wobei jede der linken und rechten Seiten des ersten Rahmens (2) eine sich nach hinten öffnende Aussparung (23) aufweist und eine Bodenoberfläche der Aussparung (23) eine Führungsseite (22) bildet, wobei die vordere äußere Oberfläche (521) des ersten Hakens (52) eine gekrümmte Oberfläche ist.

3. Kapselzuführungs- und Freigabemechanismus nach Anspruch 1, wobei die Kontaktoberfläche des ersten Kontaktes geneigt ist.

4. Kapselzuführungs- und Freigabemechanismus nach Anspruch 3, wobei die Kontaktoberfläche des zweiten Kontaktes geneigt ist und wobei unter dem zweiten Kontakt der zweite Haken (31) den Backen (5) ermöglicht, eine Schließtendenz beizubehalten.

5. Kapselzuführungs- und Freigabemechanismus nach Anspruch 1, wobei das Gehäuse (1) und der erste Rahmen (2) einstückig spritzgegossen sind und ein einstückig spritzgegossenes Teil mit einem axialen Durchgang (13) bilden und der zweite Rahmen (3) an der Rückseite des Durchgangs (13) angeordnet ist; wobei der zweite Rahmen (3) zwei nach außen vorstehende begrenzende Streifen (32) aufweist, welche jeweils auf jeder der linken und rechten Seiten des zweiten Rahmens (3) angeordnet sind, wobei das Gehäuse (1) zwei jeweils an jeder der linken und rechten Seiten der Rückseite des Durchgangs (13) angeordnete Führungsnuten (15) zur Aufnahme und Führung des begrenzenden Streifens (32) aufweist.

6. Kapselzuführungs- und Freigabemechanismus nach Anspruch 5, wobei jede Backe (5) zwischen dem begrenzenden Streifen (32) und der Unterseite der Führungsnuten (15) begrenzt ist, wobei jede Führungsnut (15) einen vorderen Bereich und einen hinteren Bereich aufweist, wobei die Oberfläche der Unterseite des hinteren Bereiches (151) der Führungsnut (15) eben ist, und wobei die Oberfläche der Unterseite des vorderen Bereiches (152) der Führungsnut (15) eine Schräge ist, welche nach außen von dem hinteren Bereich zu dem vorderen Bereich des Gehäuses (1) geneigt ist; während jeder begrenzende Streifen (32) einen vorderen Bereich und einen hinteren Bereich aufweist, die Außenseite des vorderen Bereiches (321) jedes begrenzenden Streifens (32) eben ist und wobei die Außenseite des hinteren Bereichs (32) jedes begrenzenden Streifens (32) nach innen von dem vorderen Bereich zu dem hinteren Bereich des Gehäuses (1) geneigt ist.

7. Kapselzuführungs- und Freigabemechanismus nach Anspruch 1, wobei der untere Bereich der inneren Oberfläche des Klemmbereichs (51) sich in einer Biegung befindet, welche nach innen gekrümmt ist.

8. Kapselzuführungs- und Freigabemechanismus nach Anspruch 1, wobei eine vordere Dornenscheibe (14) innerhalb der Kammer (21) des ersten Rahmens (2) angeordnet ist und eine hintere Dornenscheibe (16) auf der vorderen Endseite des zweiten Rahmens (3) angeordnet ist, wobei ein Dichtring (17) auf der vorderen Endseite des zweiten Rahmens (3) angeordnet ist.

9. Kapselzuführungs- und Freigabemechanismus nach Anspruch 8, wobei jede Backe (5) eine an der Position des Klemmbereichs (51) angeordnete Fortsatzwand (512), welche sich nach hinten erstreckt und die innere Oberfläche jeder Fortsatzwand (512) eine gekrümmte Oberfläche ist, welche nach innen gekrümmt ist.

10. Kapselzuführungs- und Freigabemechanismus nach einem der Ansprüche 1 bis 9, wobei der Antriebsmechanismus einen Verbindungsbolzen (6), eine in dem hinteren Bereich des Gehäuses (1) angeordnete rotierende Welle (18), einen Griff (7), eine auf den Verbindungsbolzen (6) angeordnete Verbindungswelle (61) und zwei Übertragungsstangen (8) umfasst;
wobei der untere Bereich des Verbindungsbolzens (6) beweglich mit der rotierenden Welle (18) verbunden ist; wobei der Verbindungsbolzen (6) durch den Griff (7) angetrieben wird, sich zu drehen, wobei die Oberseite jeder Übertragungsstange (8) jeweils drehbar mit einer der linken und rechten Enden der mit dem oberen Bereich des Verbindungsbolzens (6) in Eingriff stehenden Verbindungswelle (61) verbunden ist und die Unterseite jeder Übertragungsstange (8) jeweils drehbar mit dem zweiten Rahmen (3) über einen Bolzenstift (81) in Eingriff steht; wobei der Verbindungsbolzen (6) eine Öffnung (62) und zwei auf den linken und rechten Seiten der Öffnung (62) gebildete Streifenlöcher (63) aufweist, um jeweils jedes Ende der Verbindungswelle (61) aufzunehmen;
wobei eine Feder (9), angeordnet innerhalb der Öffnung (62) und unterhalb der Verbindungswelle (61), der Verbindungswelle (61) einen Widerstand entgegengesetzt und der Verbindungswelle (61) ermöglicht, eine Tendenz sich nach oben zu bewegen beizubehalten.

## Revendications

1. Mécanisme de distribution et de rejet de capsule dans un dispositif d'extraction de boisson, comprenant :
un boîtier (1) ayant une partie avant, une partie arrière, un orifice de chargement (11), et un orifice de chute (12) ;
un premier cadre (2) positionné à l'intérieur de la partie avant du boîtier (1), le premier cadre (2) ayant un côté gauche, un côté droit, une chambre (21) pour contenir une capsule (4) avec un bord circulaire (41) ;
un deuxième cadre (3) ayant un côté gauche et un côté droit, disposé à l'intérieur de la partie arrière du boîtier (1) et étant mobile vers l'avant et vers l'arrière par rapport au premier cadre (2) sous l'entraînement d'un mécanisme d'entraînement ;
deux mâchoires (5), disposées chacune au niveau de l'un des côtés gauche et droit du deuxième cadre (3), et les deux mâchoires (5) étant capables de s'ouvrir ou de se fermer par rapport au deuxième cadre (3), chaque mâchoire (5) ayant une partie avant et une partie arrière, la partie avant de chaque mâchoire (5) s'étendant vers l'avant du deuxième cadre (3) pour former ensemble une partie de serrage (51) pour contenir la capsule (4) ;
**caractérisé en ce que**
chaque partie de serrage (51) a un premier crochet (52) avec une surface extérieure avant (521) qui s'étend vers l'intérieur pour accrocher le bord circulaire (41) de la capsule (4) et pour enlever la capsule (4), chacun des côtés gauche et droit du premier cadre (2) a une face de guidage (22) pour recevoir la surface extérieure avant (521) de chaque premier crochet (52) et pour guider chaque premier crochet (52) pour se déplacer vers l'extérieur ;
chaque face de guidage (22) a une première surface de guidage (221) et une deuxième surface de guidage (222) qui est située sur le côté extérieur de la première surface de guidage (221) et est concave vers l'avant, et la première surface de guidage (221) et la deuxième surface de guidage (222) sont en transition douce ;
lorsque chaque mâchoire (5) continue à se déplacer vers l'avant après le déplacement de chaque mâchoire (5) vers chaque face de guidage (22) conjointement avec le deuxième cadre (3) et la surface extérieure avant (521) de chaque premier crochet (52) touchant le face de guidage correspondante (22), chaque face de guidage (22) forcera la surface extérieure avant (521) de chaque premier crochet (52) à se déplacer vers l'extérieur le long de la face de guidage (22), jusqu'à ce que la surface extérieure avant (521) de chaque le premier crochet (52) atteigne la deuxième surface de guidage (222) de chaque face de guidage (22) amenant les deux mâchoires (5) à s'ouvrir ;
chaque mâchoire (5) a un trou de guidage (53) avec une surface intérieure d'extrémité avant (531) et une surface intérieure d'extrémité arrière (532) agencées dans la direction avant-arrière ; chacun des côtés gauche et droit du deuxième cadre (3) a un deuxième crochet (31) avec une surface latérale avant (311) et une surface latérale arrière (312) qui est située à l'intérieur du trou de guidage (53) et mobile vers l'avant et vers l'arrière par rapport aux mâchoires (5) ; la surface latérale avant (311) du deuxième crochet (31) touchant la surface intérieure d'extrémité avant (531) du trou de guidage (53) définit un premier contact ; lorsque chaque mâchoire (5) continue à se déplacer vers l'avant conjointement avec le deuxième cadre (3), le premier contact force les mâchoires (5) à se déplacer vers l'intérieur, c'est-à-dire, amenant la partie de serrage (51) des mâchoires (5) à se déplacer à partir de la deuxième surface de guidage (222) vers la première surface de guidage (221) le long de la face de guidage (22) pour se fermer, et assurant que le bord circulaire (41) de la capsule (4) est situé à l'intérieur du premier crochet (52) après que les deux mâchoires (5) sont totalement fermées ;
et la surface latérale arrière (312) du deuxième crochet (31) touchant la surface intérieure d'extrémité arrière (532) du trou de guidage (53) définit un deuxième contact, et le deuxième contact force les mâchoires (5) à se déplacer vers l'arrière, pour amener les mâchoires (5) à être entraînées pour se déplacer vers l'arrière conjointement avec le deuxième cadre (3), et pendant ce temps, le premier crochet (52) qui accroche le bord circulaire (41) de la capsule (4) tire la capsule (4) pour quitter la chambre (21).

2. Mécanisme de distribution et de rejet de capsule selon la revendication 1, dans lequel chacun des côtés gauche et droit du premier cadre (2) a un évidement (23) s'ouvrant vers l'arrière, et une surface inférieure de l'évidement (23) forme la face de guidage (22), la surface extérieure avant (521) du premier crochet (52) est une surface courbée.

3. Mécanisme de distribution et de rejet de capsule selon la revendication 1, dans lequel la surface de contact du premier contact est inclinée.

4. Mécanisme de distribution et de rejet de capsule selon la revendication 3, dans lequel la surface de contact du deuxième contact est inclinée, et, sous le deuxième contact, le deuxième crochet (31) permet aux mâchoires (5) de maintenir une tendance à se fermer.

5. Mécanisme de distribution et de rejet de capsule selon la revendication 1, dans lequel le boîtier (1) et le premier cadre (2) sont moulés par injection d'un seul tenant formant une partie moulée par injection d'un seul tenant ayant un passage axial (13), et le deuxième cadre (3) est situé à l'arrière du passage (13) ; le deuxième cadre (3) a deux bandes de limitation (32) faisant saillie vers l'extérieur respectivement disposées au niveau de chacun des côtés gauche et droit du deuxième cadre (3), de manière correspondante, le boîtier (1) a deux rainures de guidage (15) disposées respectivement au niveau de chacun des côtés gauche et droit de l'arrière du passage (13) pour recevoir et guider la bande de limitation (32).

6. Mécanisme de distribution et de rejet de capsule selon la revendication 5, dans lequel chaque mâchoire (5) est limitée entre la bande de limitation (32) et le fond des rainures de guidage (15), chaque rainure de guidage (15) ayant une partie avant et une partie arrière, la surface inférieure de la partie arrière (151) de la rainure de guidage (15) est plane, et la surface inférieure de la partie avant (152) de la rainure de guidage (15) est une pente qui est inclinée vers l'extérieur à partir de la partie arrière vers la partie avant du boîtier (1) ; tandis que, chaque bande de limitation (32) a une partie avant et une partie arrière, la surface extérieure de la partie avant (321) de chaque bande de limitation (32) est plane, et la surface extérieure de la partie arrière (32) de chaque bande de limitation (32) est inclinée vers l'intérieur à partir de la partie avant vers la partie arrière du boîtier (1).

7. Mécanisme de distribution et de rejet de capsule selon la revendication 1, dans lequel la partie inférieure de la surface intérieure de la partie de serrage (51) est en courbe qui est incurvée vers l'intérieur.

8. Mécanisme de distribution et de rejet de capsule selon la revendication 1, dans lequel un disque de perçage avant (14) est disposé à l'intérieur de la chambre (21) du premier cadre (2), et un disque de perçage arrière (16) est disposé sur la surface d'extrémité avant du deuxième cadre (3), un anneau d'étanchéité (17) est disposé sur la surface d'extrémité avant du deuxième cadre (3).

9. Mécanisme de distribution et de rejet de capsule selon la revendication 8, dans lequel chaque mâchoire (5) a une paroi d'extension (512) disposée à la position de la partie de serrage (51), qui s'étend vers l'arrière, et la surface intérieure de chaque paroi d'extension (512) est une surface courbée qui est incurvée vers l'intérieur.

10. Mécanisme de distribution et de rejet de capsule selon l'une quelconque des revendications 1 à 9, dans lequel le mécanisme d'entraînement comprend une bielle (6), un arbre rotatif (18) disposé au niveau de la partie arrière du boîtier (1), une poignée (7), un arbre de liaison (61) disposé sur la bielle (6), et deux barres de transmission (8) ;
la partie inférieure de la bielle (6) est reliée de manière mobile à l'arbre rotatif (18) ; la bielle (6) est entraînée en rotation par la poignée (7), le dessus de chaque barre de transmission (8) est respectivement relié en rotation à l'une des extrémités gauche et droite de l'arbre de bielle (61) qui est engagé avec la partie supérieure de la bielle (6), et le fond de chaque barre de transmission (8) est respectivement engagé en rotation avec le deuxième cadre (3) par l'intermédiaire d'un arbre de broche (81) ; la bielle (6) a une ouverture (62) et deux trous de bande (63) formés sur les côtés gauche et droit de l'ouverture (62) pour recevoir respectivement chaque extrémité de l'arbre de bielle (61) ;
un ressort (9), disposé à l'intérieur de l'ouverture (62) et en dessous de l'arbre de bielle (61), résiste à l'arbre de bielle (61) permettant à l'arbre de bielle (61) de maintenir une tendance à se déplacer vers le haut.
